# EUROPEAN PATENT APPLICATION

(11) **EP 2 039 898 A1**
(43) Date of publication of application: **25.03.2009**
(21) Application number: 08162623.6
(22) Date of filing: 19.08.2008
(51) Int. Cl.: F01N 3/033, F01N 3/035, B01D 53/94, F01N 3/021, F01N 3/023, F01N 7/02

(54) **Continuously regenerating particulate filter for internal combustion engine**

(30) Priority: 24.09.2007 US 859936
(71) Applicant: Deere & Company, Moline, IL 61265-8098 (US)
(72) Inventor: Winsor, Richard E., Waterloo, IA 50701 (US); Baumgard, Kirby J., Cedar Falls, IA 50613 (US); Nevin, Ryan M., Waterloo, IA 50701 (US); Huynh, Cuong T., Independence, IA 50644 (US); Lohmann, Craig W., Denver, IA 50622 (US); Holthaus, Brian E., Waterloo, IA 50701 (US)
(74) Representative: Löser, Iris

(57) **Abstract**

An internal combustion engine system having a non -catalyzed particulate filter (28) receiving products of combustion at a temperature of frequently above 600°C and an excess of oxygen of between 0.5 and 0.8 % from a stoichiometric diesel engine. A NOₓ reduction catalyst (30) is positioned downstream of the particulate filter (28). The engine system may include a turbocharger (16) and the particulate filter (28) and NOₓ reduction catalyst (30) may be positioned either upstream of the turbine (24) or downstream of the turbine (24) or alternatively the particulate filter (28) upstream of the turbine (24) and the NOₓ reduction catalyst (30) downstream of the turbine (24).

## Description

This invention was made with Government support under contract DE-FC26-05NT42416 awarded by the Department of Energy. The U.S. government may have certain rights in this invention.

The present invention relates to the field of internal comb ustion engine systems, and more particularly to engine systems having exhaust aftertreatment devices and to a respective method.

Internal combustion engines come in a number of forms, the most common of which are spark-ignited, gasoline-fueled engines and compression-ignition, diesel-fueled engines. The spark-ignited, gasoline-fueled engine meters fuel into air, controlled by a throttle valve, to produce a mixture in the combustion chamber that is as close to stoichiometric as possible. The stoichiometric air-fuel ratio is the mass ratio at which all the fuel and all the air are combined in the combustion process. For gasoline -fueled, spark-ignited engines; this air-fuel ratio is 14.7-1. Operation at this condition enables appropriate exhaust aftertreatment using a three-way catalyst to reduce oxides of nitrogen in the engine exhaust.

The compression-ignition, or diesel type engine , is used in many commercial and industrial power applications because of outstanding durability and fuel economy superior to the spark-ignited, gasoline-fueled engine. The diesel engine utilizes the heat of compression of intake air into which a timed and metered quantity of fuel is injected to produce combustion. The nature of the diesel engine cycle is that it has a variable a irfuel ratio that can, under part power conditions, rise to levels significantly above stoichiometric. This results in enhanced part power fuel economy since only the quantity of fuel needed for particular power levels is supplied to the engine.

One of the issues with an engine of this type is the impact on emissions. In addition to generation of carbon monoxide and nitrous oxide , there is the generation of particulates in the form of soot. A number of approaches have been employed to reduce particulate s while at the same time reducing oxides of nitrogen to evermore stringent levels mandated by the federal government.

Stoichiometric diesel engines have been proposed to achieve this balance since they enable the use of automotive style catalyst s to red uce oxides of nitrogen. By operating the engine at or near stoichiometric, generally around 14.7 ratio of air to fuel , a three-way catalyst may be employed. However, operation at this air fuel ratio causes a substantial increase in diesel particulates. Acc ordingly, diesel particulate filters must be employed to filter out the particulates, but generation of particulates is significant enough that frequent regeneration of the filters through temporary heating or other means is necessary to remove the collected particulate matter.

Accordingly a need exists in the art to provide an engine system of this type having a superior ability to regenerate a diesel particulate filter.

It is therefore the object of the present invention to comply with this need.

This object is met according to the invention by the teaching of claim 1 or 7 respectively, while features developing the solution in an advantageous manner are set forth in the further claims.

In one form, the invention includes an internal combustion engin e system having an internal combustion engine with an air intake and an exhaust for products of combustion, the products of combustion having an excess of oxygen and a temperature greater than approximately 600°C. A non -catalyzed particulate filter receive s products of combustion from the exhaust and a NOₓ reduction catalyst downstream from and receiving fluid from the particulate filter reduces the oxides of nitrogen.

In another form, the invention includes a method of operating an internal combustion engine system including the steps of operating an air breathing , fuel consuming, internal combustion engine to produce products of combustion in an exhaust with a temperature greater than approximately 600°C and an excess of oxygen.

The products of combustion are passed over a non-catalyzed particulate filter and subsequently passed over a NOₓ reduction catalyst.

### An embodiment of the invention described below is shown in the drawings, in which

- Fig. 1: is a schematic drawing of an internal combustion engine embodying the present invention;
- Fig. 2: is a schematic drawing of an alternate embodiment of the present invention; and
- Fig. 3: is still another alternative embodiment of the present invention.

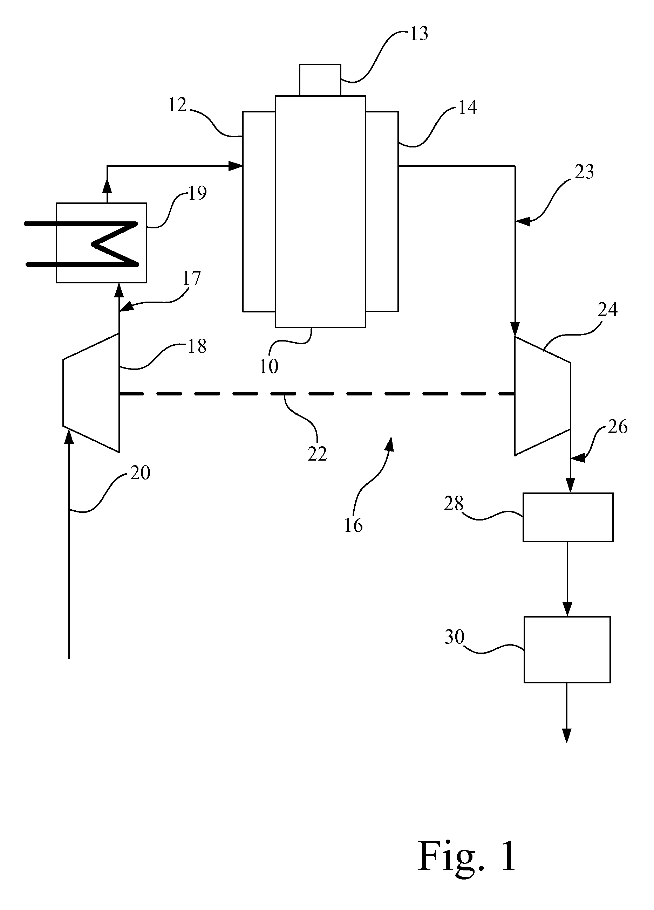

Fig. 1 shows a power system having as its foundation an air breathing, fuel consuming, internal combustion engine 10 in which one or more pistons reciprocate within an engine block and are connected to a crankshaft for producing a rotary output. Each piston forms part of a variable volume combustion chamber that receives air for combustion from an intake system 12. The products of combustion pass through an exhaust system 14. In typical fashion, poppet valves (not shown to simplify the understanding of the invention) are actuated by camshafts to open at the appropriate point in the cycle to permit intake of air or allow exhaust of the products of combustion. As herein shown, the internal combustion engine is a compression ignition or diesel type. This engine is usually characterized by having a significantly high compression ratio for intake air so that a hydrocarbon fuel will self -ignite upon injection into the air heated by the compression process. In such an engine, a fuel system 13 delivers a metered quantity of fuel at the appropriate time interval to pro duce the desired power. Fuel system 13 produces the fuel quantity and timing in response to selected engine operating parameters and command from a fuel system controller (not shown).

In an attempt to further increase the efficiency of the engine 10, a turbocharger, identified by reference character 16 may be employed. Turbocharger 16 has a compressor 18 receiving intake air through conduit 20 and pressurizing it for delivery via conduit 17 to the intake system 12. Consequently, the air entering the combu stion chamber of the internal combustion engine 10 is at a higher density than obtainable from ambient air pressures and can produce greater power. An intercooler 19 receives the air at an increased pressure and temperature from compressor 18 and cools it to increase the charge density and enable greater power output.

The compressor 18 is driven by a shaft 22 connected to a turbine 24 receiving the products of combustion from exhaust line 23 to be driven into rotation and thus drive compressor 18. The inlet to turbine 24 may employ variable geometry of different types to attempt to maintain gas velocity as high as possible for lower flow conditions experienced under part-power. The exhaust gases that have passed over turbine 24 exit the system through exhau st line 26 where they may be subjected to exhaust aftertreatment, as described below, to reduce products in the exhaust system that are considered to be harmful to the environment.

A diesel particulate filter 28 is interposed in exhaust line 26 and a th ree-way NOₓ catalyst 30 is provided in exhaust line 26 downstream of diesel particulate filter 28. Internal combustion engine 10 is operated as a stoichiometric diesel engine in that the ratio of combustion air to fuel consumed by the engine 10 is approxim ately stoichiometric, which is usually about 14.7 to 1. The mixture is based on air mass to fuel mass flow in the exhaust. Stoichiometric means that the mixture contains only the proper amount of oxygen to consume all of the fuel in the combustion process. However, because combustion is not complete, the exhaust from a stoichiometric engine contains some oxygen which is typically 0.5 to 0.8% even though the overall fuel air ratio is stoichiometric. The oxygen thus contained in the engine exhaust is balance d by a similar amount of carbon monoxide and hydrogen so that there is no excess oxygen since this would prevent the NOₓ reduction catalyst 30 from removing NOₓ in the engine exhaust. By operating the engine 10 in a stoichiometric manner , its exhaust is very hot and is generally greater than approximately 600°C.

The diesel particulate filter 28 is absent a catalytic treatment and may be a wall-flow monolithic particulate filter. It should be apparent to those skilled in the art that other forms of uncatalyzed particulate filters may also be employed. The most common particulate filter is made of cordierite (a ceramic material that is also used as catalytic converter support (core). Cordierite filters provide excellent filtration efficiency, are (relatively) inexpensive, and have thermal properties that simplifiy vehicle packaging.
The second most popular filter material is silicon carbide or SiC.

Because the exhaust of the engine 10 is hot , the small amount of oxygen present is able to continuously oxidize the collected particulate matter on the particulate filter 28. This occurs because the particulate filter 28 has no catalytic treatment since the presence of the catalyst would cause the oxygen to preferentially react with carbon monoxide and hydrogen a nd leave the carbon collected by the filter unreacted. After the exhaust gas has passed through the particulate filter, the NOₓ reduction catalyst 30 (or three-way catalyst, is employed to eliminate oxides of nitrogen and other harmful components, such as carbon monoxide and hydrocarbons in the exhaust. By placing the uncatalyzed particulate filter 28 ahead of the NOₓ reduction catalyst 30, the temperature is sufficiently high to cause the accumulated carbon on the particulate filter 28 to oxidize.

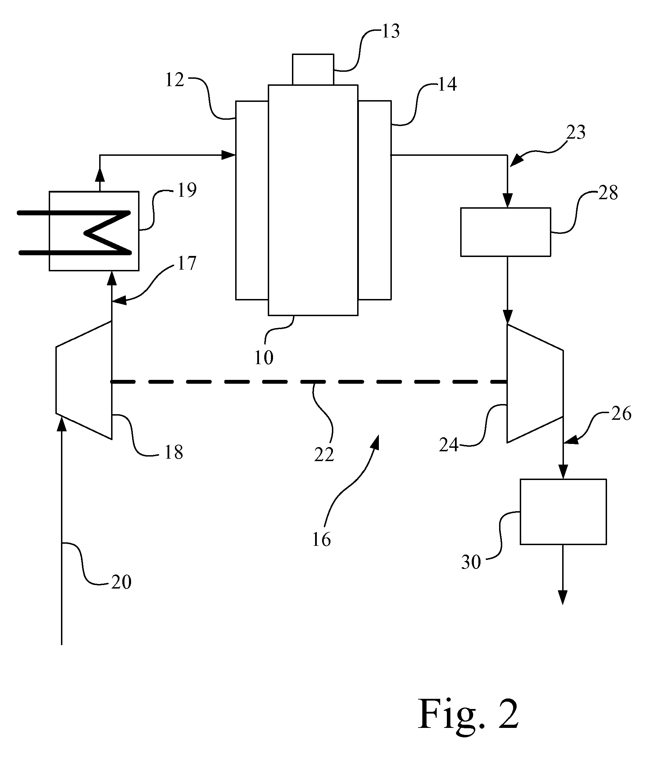

As shown in Fig. 1 , the particulate filter 28 and the NOₓ catalyst 30 are placed downstream of the turbine in exhaust line 26. In Fig. 2 however, the particulate filter 28 is placed upstream of turbine 24 in exhaust line 23 and the NOₓ catalyst 30 placed downstream of turbine 24. This may be done to place the diesel particulate filter in a fluid stream that is sufficiently hot to maintain a continuous oxidization of carbon particles collected on the particulate filter 28. It should be noted that in this embodime nt also, the NOₓ catalyst 30 is downstream of the uncatalyzed particulate filter 28.

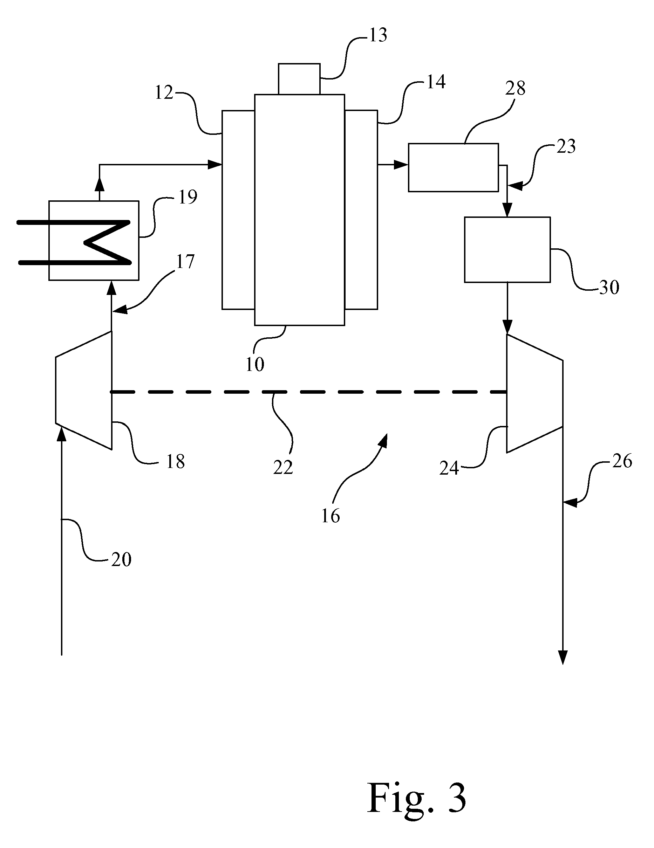

Fig. 3 shows still another arrangement in which both the particulate filter 28 and NOₓ catalyst 30 are placed upstream of turbine 24 in exhaust line 23. Again, it is no ted that the uncatalyzed particulate filter 28 is upstream of NOₓ catalyst 30 to provide maximum temperature and oxygen for continuous oxidization of the carbon particles thus accumulated.

Although the engine system is shown incorporating a turbocharger 16 , it should be apparent to those skilled in the art that the engine 10 may also be operated without a turbocharger and still realize the benefits of the uncatalyzed particulate filter upstream of the NOₓ catalyst.

Having described the preferred embodiment, it will become apparent that various modifications can be made without departing from the scope of the invention as defined in the accompanying claims.

## Claims

1. An internal combustion engine system comprising an internal combustion engine (10) having an air intake and an exhaust for products of combustion, said products of combustion having an excess of oxygen and a temperature frequently greater than approximately 600° C, a non-catalyzed particulate filter (28) receiving products of combustion from said exhaust; and a NOₓ reduction catalyst (30) downstream from and receiving fluid from said particulate filter (28).

2. The internal combustion engine system according to claim 1, **characterized in that** said internal combustion engine (10) is a stoichiometric diesel engine.

3. The internal combustion eng ine system according to claim 1 or 2 , **characterized in that** said excess oxygen is up to approximately 0.8%, preferably said excess oxygen is between approximately 0.5 and 0.8%.

4. The internal combustion engine system according to one or several of the previous claims, **characterized by** a pressurizing device including a turbine (24) receiving the exhaust products of combustion to drive a compressor (18).

5. The internal combustion engine system according to claim 4, **characterized in that** said particulate filter (28) and NOₓ reduction catalyst (30) are positioned downstream from and receiving fluid from said turbine (24) or that said particulate filter (28) is upstream of said turbine (24) and said NOₓ reduction catalyst (30) is downstream of said turbine (24) or said particulate filter (28) and said NOₓ reduction catalyst (30) are positioned upstream of said turbine (24).

6. The internal combustion engine system according to one or several of the previous claims, said particulate filter (28) is a ceramic filter and/or that said NOₓ reduction catalyst (30) is a three-way catalyst.

7. A method of operating an internal combustion engine system comprising the steps of operating an air breathing, fuel consuming internal combustion engine (10) to produce products of combustion on an exhaust with a temperature frequently greater than approximately 600° C and an excess of oxygen, passing said products of combustion through a non-catalyzed particulate filter (28); and subsequently passing said products of combustion over a NOₓ reduction catalyst (30).

8. The method according to claim 7 , **characterized in that** said internal combustion engine (10) is a stoichiometric diesel.

9. The method according to claim 7 or 8, **characterized in that** said excess of oxygen is up to approximately 0.8%, preferably said excess oxygen is between approximately 0.5 and 0.8%.

10. The method according to one or several of the previous claims, **characterized in that** said engine (10) is operated with a pressurizing device including a turbine (24) receiving the products of combustion from said engine (10) to drive a compressor (18).

11. The method according to claim 10, **characterized in that** said products of combustion are passed through said non -catalyzed particulate filter (28) and said NOₓ reduction catalyst (30) downstream of said turbine (24) or wherein said products of combustion are passed through said non-catalyzed particulate filter (28) upstream of said turbine (24) and said products of combustion are passed over said NOₓ reduction catalyst (30) downstream of said turbine (24) or wherein said products of combustion are passed through said non-catalyzed particulate filter (28) and said NOₓ reduction catalyst (30) downstream of said turbine.

12. The method according to one or several of the claims 7 to 11 , **characterized in that** said particulate filter (28) is a ceramic filter and/or wherein said NOₓ reduction catalyst is a three-way catalyst (30).
